# EUROPEAN PATENT APPLICATION

(11) **EP 4 597 265 A1**
(43) Date of publication of application: **06.08.2025**
(21) Application number: 24155649.7
(22) Date of filing: 04.02.2024
(51) Int. Cl.: G06F 3/01, G06Q 10/0639, G06Q 50/04

(54) **AUGMENTED-REALITY SYSTEM AND OPERATING METHOD THEREOF**

(71) Applicant: Kit-Ar Limited, London EC2A 2BB (GB); Skillaugment, Lda, 3830 lhavo (PT)
(72) Inventor: Cho, Youngjun, London, EC2A 2BB (GB); Oliveira, Manuel, London, EC2A 2BB (GB); Costa, João, 3830 Ílhavo (PT)
(74) Representative: Patentree

(57) **Abstract**

The present document discloses an augmented-reality system for monitoring and reducing distraction of an operator conducting physical operations in an industrial work environment, said system comprising: a head-mounted display for displaying virtual graphical objects superimposed onto a field of view of the operator; one or more sensors for transducing one or more biological behaviour-associated signals including an eye tracker for tracking the operator's gaze; and a data processor. It is further disclosed a method for operating the augmented-reality system.

## Description

### TECHNICAL FIELD

The present disclosure relates to an augmented-reality system for monitoring and reducing distraction of an operator conducting physical operations in an industrial work environment and operating method thereof. It is further disclosed a behavioural cue estimator to sense a distracted status and redirect focus on an augmented reality environment and a method thereof.

### BACKGROUND

In accordance with recent development of user status monitoring technologies, research into technology to detect a user's concentration and distracted status, namely, distraction monitoring, is being now actively conducted.

Such distraction monitoring utilizes, as a kernel technology thereof, biosensing measurement technologies not only to read a cue of distracted status, but also to estimate attention and arousal. To this end, for realization of technology that senses distracted status cues in prior art inventions, conventional electronic systems are equipped with physiological monitoring systems such as electroencephalogram detection systems or facial action unit monitoring systems.

The systems are interlinked with contextual information - various prior art systems and methods focus primarily on and work only with driving contexts and measurement apparatus (e.g. US8239015B2, US10621436B2).

These facts are disclosed in order to illustrate the technical problem addressed by the present disclosure.

### GENERAL DESCRIPTION

A method and apparatus for monitoring a user's distraction status and redirecting information based upon the monitored information in augmented reality-assisted manufacturing tasks by an individual on a manufacturing shopfloor, comprising:
an augmented reality head-mounted display hardware to be worn on a user's head; a sensor layer which is composed of measurement a plurality of hardware and estimators of a user's behavioural pose, position and movement and gaze; a task scheduler that includes pre-set physical space mapping information and generates augmented-reality-based instructions; a distraction detection unit that provides and runs a mathematical model based on a set of statistical functions, metrics and machine learning methods that summarize the behavioural data from the sensor layer and capture distraction identities based on the user's interaction patterns between the data from the sensor layer and the scheduler; and a redirection unit which is triggered by the distraction detection unit so as to overlay graphical guidance that redirects a user's focus onto physical environment and objects visible on the augmented reality head-mounted display.

The present documents discloses an augmented-reality system for monitoring and reducing distraction of an operator conducting physical operations in an industrial work environment, said system comprising: a head-mounted display for displaying virtual graphical objects superimposed onto a field of view of the operator; one or more sensors for transducing one or more biological behaviour-associated signals including an eye tracker for tracking the operator's gaze; and a data processor arranged for carrying out the steps: receiving a task map comprising a predetermined sequence of physical operations to be carried out by the operator and corresponding 3-dimensional eye-tracking gaze data for each said physical operation; for each operation of said predetermined sequence of physical operations, as the operator conducts physical operations in the industrial work environment: collecting the transduced signals from the one or more sensors; generating 3-dimensional eye-tracking gaze data from the collected signals; determining a distraction status of the operator as distracted if the collected 3-dimensional eye-tracking gaze data does not match the received 3-dimensional eye-tracking gaze data; if the distraction status of the operator is determined as distracted, generating a virtual graphical object to be superimposed by said head-mounted display onto the field of view of the operator for redirecting the operator's gaze.

In an embodiment, the data processor is further arranged for training a model correlating collected sensor data with operator distraction status.

In an embodiment, the data processor is further arranged for training a model correlating collected sensor data with operator distraction status, using a convolutional neural network, in particular a convolutional and gated-recurrent networks-based machine learning model, further comprising two fully connected networks.

In an embodiment, the data processor is further arranged for training a model correlating collected sensor data with operator distraction status, comprising a plurality of models, the number of models being the number of manufacturing tasks, which are recorded in a scheduler cache, wherein each model's machine learning outcome is stored in an output cache and outputted.

In an embodiment, the collected sensor data comprises a 3-dimensional attention gaze heatmap as training features of said model.

In an embodiment, the collected 3-dimensional eye-tracking gaze data is determined as not matching the received 3-dimensional eye-tracking gaze data if the collected 3-dimensional eye-tracking gaze data is outside a received 3-dimensional eye-tracking gaze region.

In an embodiment, the eye tracker is configured to measure focal point, gaze and distance from the user's eye region, or a combination of these.

In an embodiment, the one or more sensors for transducing one or more biological behaviour-associated signals comprise: an inertial measurement unit for measuring operator's head movement; and/or a hand-motion tracker for tracking operator's hand movement and/or position.

In an embodiment, the inertial measurement unit is configured to measure head origins, angles and velocity, acceleration, or a combination of these.

In an embodiment, the hand motion tracker is configured to measure hand position, posture, and dynamic gestures, or a combination of these.

In an embodiment, the hand motion tracker is a camera.

In an embodiment, the data processor is configured for generating a user interface on head-mounted display, which is arranged for enabling user engagement with the virtual graphical objects via gesture recognition and/or vocal commands and/or via a peripheral input.

In an embodiment, the head-mounted display comprises a transparent display for displaying see-through images as said virtual graphical objects superimposed onto a field of view of the operator, or a mobile display for overlaying visual objects and texts on real-time scene images.

In an embodiment, the augmented-reality system further comprising a depth-sensing camera for performing an environmental mapping and enhancing the placement and interaction of the virtual objects in the augmented reality space.

It is also disclosed a method for operating an augmented-reality system for monitoring and reducing distraction of an operator conducting physical operations in an industrial work environment, said system comprising: a head-mounted display for displaying virtual graphical objects superimposed onto a field of view of the operator; one or more sensors for transducing one or more biological behaviour-associated signals including an eye tracker for tracking the operator's gaze; said method comprising using a data processor for carrying out the steps of: receiving a task map comprising a predetermined sequence of physical operations to be carried out by the operator and corresponding 3-dimensional eye-tracking gaze data for each said physical operation; for each operation of said predetermined sequence of physical operations, as the operator conducts physical operations in the industrial work environment: collecting the transduced signals from the one or more sensors; generating 3-dimensional eye-tracking gaze data from the collected signals; determining a distraction status of the operator as distracted if the collected 3-dimensional eye-tracking gaze data does not match the received 3-dimensional eye-tracking gaze data; if the distraction status of the operator is determined as distracted, generating a virtual graphical object to be superimposed by said head-mounted display onto the field of view of the operator for redirecting the operator's gaze.

In an embodiment, the method comprising the step of training a model correlating collected sensor data with operator distraction status.

In an embodiment, the method comprising the step of training the model correlating collected sensor data with operator distraction status, using a convolutional neural network.

It is further disclosed a non-transitory computer-readable medium comprising instructions that, when executed by a data processor of an augmented reality system, cause the data processor to perform the previously disclosed method.

### BRIEF DESCRIPTION OF THE DRAWINGS

The following figures provide preferred embodiments for illustrating the disclosure and should not be seen as limiting the scope of invention.
**Figure 1****:** Schematic representation of an embodiment of an augmented reality apparatus interaction with an environment.
**Figure 2****:** Flowchart representation of an embodiment of a method for detecting the attention.
**Figure 3****:** Flowchart representation of an embodiment of the attention method.
**Figure 4****:** Schematic representation of an embodiment of an augmented reality apparatus.
**Figure 5****:** Flowchart representation of an embodiment of the detection logic.

### DETAILED DESCRIPTION

The present disclosure relates to systems and methods for continuous distraction status monitoring and redirection in augmented reality assisted manufacturing tasks by an individual on a manufacturing shopfloor, including assembly, maintenance, and quality management tasks.

The present disclosure enables an augmented reality system to sense a distracted status through a behavioural cue estimator and redirect a user's focus in augmented reality assisted tasks. Particularly, the present system and method captures a moment when a certain threshold level of user's distraction is detected and provides interventions in time by redirecting the user's focus and enhancing the task performance.

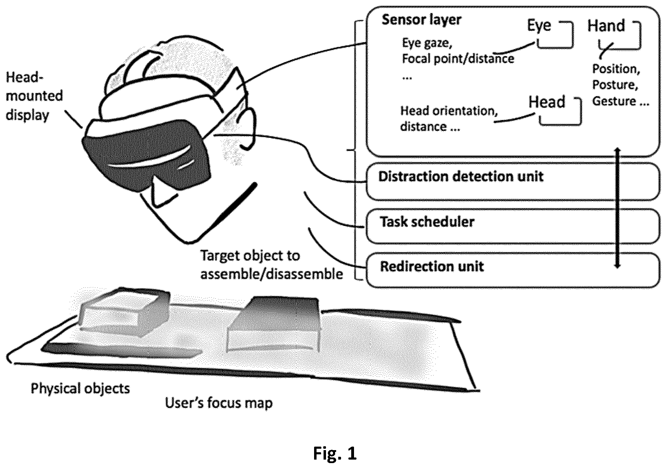

Figure 1 shows a schematic representation of an embodiment of an augmented reality apparatus interaction with an environment. For example, the augmented reality apparatus could be used by a worker on a factory shop floor, wherein physical objects which need the worker's attention are placed in the floor.

In an embodiment, the present disclosure comprises a sensor layer that collects and streams a set of behavioural signals including focal point, gaze and distance from the user's eye region, and head origins, angles, posture, positional information of the user's head and hands; a distraction detection unit that provides a mathematical model based on a set of statistical functions, metrics and machine learning methods (including at least one feature mapping and feature learning) that summarize the behavioural patterns of distraction status to produce a user's focus map and compare the produced information with an augmented reality task map (such as augmented reality assisted visual instruction - see, for example, as disclosed in EP 22196244.2 filed on 16.09.2022, "spatial process map", which is hereby incorporated by reference, in in particular precisely incorporating the method and device for building such a spatial process map, in particular as claimed and as described) outputted from an augmented reality task scheduler; and the task scheduler that generates a task map sequentially along with time, physical status of tasks; and finally a redirection unit that adaptively modifies the task map to overlay graphical highlights that redirects a user's focus onto physical target objects and environment.

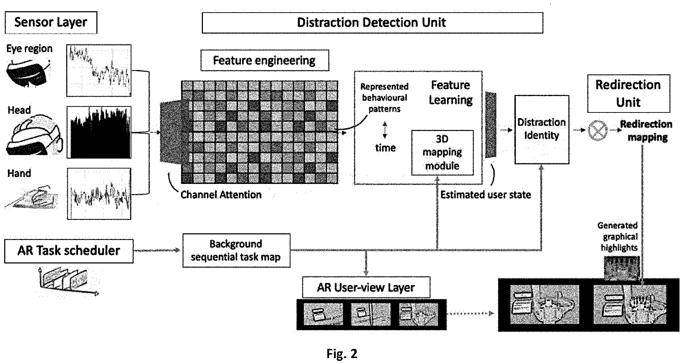

Figure 2 shows a flowchart representation of an embodiment of a method for detecting the attention.

In another embodiment, the sensors in a sensor layer, include multi-degree of freedom inertial measurement unit sensors which measure head origins, angles and velocity, acceleration; eye activity measurement sensors which obtain gaze patterns, focal point and distance; and vision cameras that capture hand position, posture and dynamic gestures.

In an embodiment, the sensor layer produces multiple one-dimensional timeseries data which is remapped on a two-dimensional plane with a channel attention as a part of feature engineering for gathering cues of user's focus.

In an embodiment, the engineered behavioural pattern data is regularly updated at a set updated time interval, e.g., every 1 second, and the distraction detection unit preserves each updated pattern data and converts it into multi-dimensional tensor data containing the engineered pattern data and time together. To obtain distraction identities, the converted data are analysed in a convolutional and gated-recurrent networks-based machine learning model to estimate the user's distraction state used for determining whether to trigger the redirection unit that shows visual guidance in augmented reality.

In an embodiment, the method reads behavioural information through on-board imaging sensors embedded in a head-mounted display - one from first person point of view and another facing the user's eyes - and an inertial measurement unit. It processes each behavioural information type separately (e.g. focal point, gaze and distance from the user's eye region, and head origins, angles, posture, positional information of the user's head and hands read from the imaging sensors) in both time and frequency domains separately, which are mapped onto a tensor at a given point (e.g. every second).

In an embodiment, behavioural information is extracted and processed in the time and frequency domain separately, and converted into multi-dimensional tensors, rather than using the image scenes as a series of typical 2D images which have been mainly used in prior art distraction identity detection methods. The tensors are further analysed in machine learning models for detecting the worker's distraction identity in a more reliable way given its rich information. Once the system detects that the worker is distracted, it shows visual guidance in augmented reality to redirect the worker's focus to the corresponding action that the worker is supposed to make in a given task. The system has an AR task scheduler which has pre-defined task information and sequences.

In an embodiment, the task scheduler unit includes pre-defined task information and sequences including a set of graphical instructions and/or highlights which can be selectively visible to an augmented reality to a user of an augmented reality head-mounted display screen. Here, the unit plays a pivotal role in selectively redirecting and modifying the visible cues on the screen.

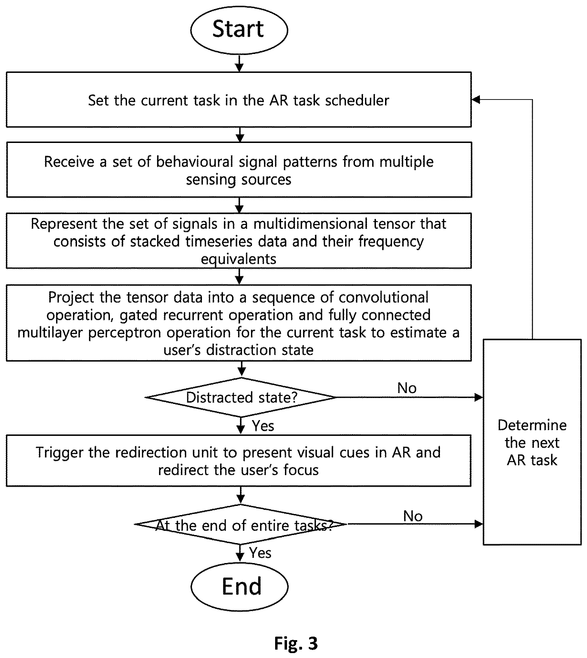

Figure 3 shows a flowchart representation of an embodiment of the attention method.

In an embodiment, the distraction/attention detection and redirection method pipeline, starting from setting the current task in the augmented reality task scheduler, monitoring and processing multi-channel behavioural signal information, to running a neural network operations to identify the user's distracted state and determining whether to trigger the redirection unit or proceed to a next task.

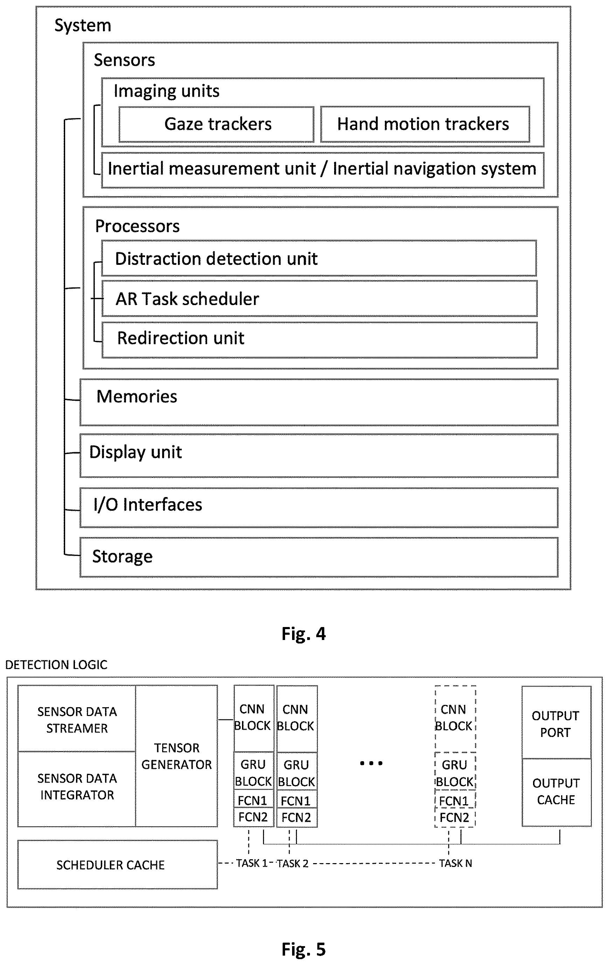

Figure 4 shows a schematic representation of an embodiment of an augmented reality apparatus.

In an embodiment, this details the system composition which shows each hardware component which the sensor layer, the distraction detection unit, the task scheduler, and the redirection unit belong to or are processed in. The system includes sensor hardware, processors, memories, display unit, I/O interfaces, storage which can form an independent embedded system. The sensor hardware includes imaging units that allow gaze and hand motion tracking, and inertial measurement and navigation system.

Figure 5 shows a flowchart representation of an embodiment of the detection logic.

In an embodiment, multidimensional tensors of behavioural signal information are formed based upon streamed and processed sensor data, which are inputted to a machine learning model that consists of a convolutional neural network block, gated-recurrent unit bloc and two fully connected networks. There are N models corresponding to the number of manufacturing tasks, which are recorded in a scheduler cache. Each model's machine learning outcome is stored in the output cache and outputted.

In an embodiment, in further detail, the distraction/attention detection unit accumulates both of user's focus states (the remapped two-dimensional behavioural data) and background task maps from the task scheduler, across time. Both are not visible to users and instead running on background. Here, the mentioned mathematical model within the unit makes a comparison between the two in 2D plane at a given time to capture distraction identities.

In an embodiment, the redirection unit is triggered by the distraction detection unit, which makes a decision on which graphical features to be redirected and visible on a user's head-mounted display screen.

In a particular example, the present disclosure relates to methods and apparatus for capturing distracted/attention status based on the interaction patterns of a user with physical objects on a manufacturing workflow through augmented reality so as to effectively redirect graphical features in augmented-reality-based instructions and highlights in real time. The distraction detection unit includes a mathematic function based on a set of statistics, metrics and one of more machine learning models that receive as input engineered feature maps converted from multiple one-dimensional timeseries data of eyes, head and hand behavioural patterns. The unit outputs distraction identities which represent the degrees of concentration and distraction status in a user in performing an augmented-reality assisted task.

The term "comprising" whenever used in this document is intended to indicate the presence of stated features, integers, steps, components, but not to preclude the presence or addition of one or more other features, integers, steps, components, or groups thereof.

The disclosure should not be seen in any way restricted to the embodiments described and a person with ordinary skill in the art will foresee many possibilities to modifications thereof. The above-described embodiments are combinable.

The following claims further set out particular embodiments of the disclosure.

## Claims

1. Augmented-reality system for monitoring and reducing distraction of an operator conducting physical operations in an industrial work environment, said system comprising:
a head-mounted display for displaying virtual graphical objects superimposed onto a field of view of the operator;
one or more sensors for transducing one or more biological behaviour-associated signals including an eye tracker for tracking the operator's gaze; and
a data processor arranged for carrying out the steps:
receiving a task map comprising a predetermined sequence of physical operations to be carried out by the operator and corresponding 3-dimensional eye-tracking gaze data for each said physical operation;
for each operation of said predetermined sequence of physical operations, as the operator conducts physical operations in the industrial work environment:
collecting the transduced signals from the one or more sensors;
generating 3-dimensional eye-tracking gaze data from the collected signals;
determining a distraction status of the operator as distracted if the collected 3-dimensional eye-tracking gaze data does not match the received 3-dimensional eye-tracking gaze data;
if the distraction status of the operator is determined as distracted, generating a virtual graphical object to be superimposed by said head-mounted display onto the field of view of the operator for redirecting the operator's gaze.

2. Augmented-reality system according to the previous claim, wherein the data processor is further arranged for training a model correlating collected sensor data with operator distraction status.

3. Augmented-reality system according to the previous claim, wherein the data processor is further arranged for training a model correlating collected sensor data with operator distraction status, using a convolutional neural network, in particular a convolutional and gated-recurrent networks-based machine learning model, further in particular wherein the collected sensor data comprises a 3-dimensional attention gaze heatmap as training features of said model.

4. Augmented-reality system according to any of the previous claims, wherein the collected 3-dimensional eye-tracking gaze data is determined as not matching the received 3-dimensional eye-tracking gaze data if the collected 3-dimensional eye-tracking gaze data is outside a received 3-dimensional eye-tracking gaze region.

5. Augmented-reality system according to any of the previous claims wherein the eye tracker is configured to measure focal point, gaze and distance from the user's eye region, or a combination of these.

6. Augmented-reality system according to any of the previous claims wherein the one or more sensors for transducing one or more biological behaviour-associated signals comprise:
an inertial measurement unit for measuring operator's head movement; and/or
a hand-motion tracker for tracking operator's hand movement and/or position.

7. Augmented-reality system according to claim 6 wherein the inertial measurement unit is configured to measure head origins, angles and velocity, acceleration, or a combination of these.

8. Augmented-reality system according to claim 6 or 7 wherein the hand motion tracker is configured to measure hand position, posture, and dynamic gestures, or a combination of these.

9. Augmented-reality system according to any of the claims 6-8 wherein the hand motion tracker is a camera.

10. Augmented-reality system according to any of the previous claims wherein the data processor is configured for generating a user interface on head-mounted display, which is arranged for enabling user engagement with the virtual graphical objects via gesture recognition and/or vocal commands and/or via a peripheral input.

11. Augmented-reality system according to any of the previous claims wherein the head-mounted display comprises a transparent display for displaying see-through images as said virtual graphical objects superimposed onto a field of view of the operator, or a mobile display for overlaying visual objects and texts on real-time scene images.

12. Augmented-reality system according to any of the previous claims further comprising a depth-sensing camera for performing an environmental mapping and enhancing the placement and interaction of the virtual objects in the augmented reality space.

13. Method for operating an augmented-reality system for monitoring and reducing distraction of an operator conducting physical operations in an industrial work environment, said system comprising:
a head-mounted display for displaying virtual graphical objects superimposed onto a field of view of the operator;
one or more sensors for transducing one or more biological behaviour-associated signals including an eye tracker for tracking the operator's gaze;
said method comprising using a data processor for carrying out the steps of:
receiving a task map comprising a predetermined sequence of physical operations to be carried out by the operator and corresponding 3-dimensional eye-tracking gaze data for each said physical operation;
for each operation of said predetermined sequence of physical operations, as the operator conducts physical operations in the industrial work environment:
collecting the transduced signals from the one or more sensors;
generating 3-dimensional eye-tracking gaze data from the collected signals;
determining a distraction status of the operator as distracted if the collected 3-dimensional eye-tracking gaze data does not match the received 3-dimensional eye-tracking gaze data;
if the distraction status of the operator is determined as distracted, generating a virtual graphical object to be superimposed by said head-mounted display onto the field of view of the operator for redirecting the operator's gaze.

14. Method according to the previous claim, comprising the step of training a model correlating collected sensor data with operator distraction status, in particular the model correlating collected sensor data with operator distraction status, using a convolutional neural network.

15. Non-transitory computer-readable medium comprising instructions that, when executed by a data processor of an augmented reality system, cause the data processor to perform the method of any of the claims 13-14.
